# EUROPÄISCHE PATENTANMELDUNG

(11) **EP 1 961 705 A2**
(43) Veröffentlichungstag der Anmeldung: **27.08.2008**
(21) Anmeldenummer: 08002795.6
(22) Anmeldetag: 15.02.2008
(51) Int. Cl.: C02F 1/28, C02F 1/42, C02F 101/10

(54) **Verfahren zum Entfernen von Arsen aus wässrigen Lösungen**

(30) Priorität: 24.02.2007 DE 102007009362
(71) Anmelder: Mion Tec GmbH, 51381 Leverkusen (DE)
(72) Erfinder: Mauer, Dieter, Dr., 51377 Leverkusen (DE); Alt, Joachim, 51063 Köln (DE)

(57) **Zusammenfassung**

Die vorliegende Erfindung betrifft ein Verfahren zum Entfernen von Arsen aus wässrigen Lösungen. Zwei geeignet gekoppelte Adsorberstufen dienen dazu, den Verbrauch von zu deponierendem Adsorbens deutlich zu verringern.

## Beschreibung

Die vorliegende Erfindung betrifft ein Verfahren zum Entfernen von Arsen aus wässrigen Lösungen.

Die Entfernung von Arsen aus wässrigen Lösungen wird in der Praxis durch Fällung mit Eisenchlorid oder durch Adsorption des Arsens an Adsorbermaterialien realisiert.

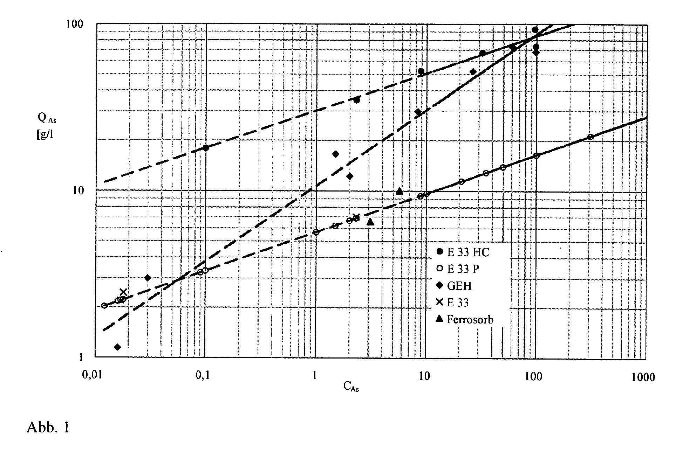

Bei den verwendeten Eisenoxidhydroxid-Adsorbern konnte eine Aufnahme gemäß der Isothermengleichung nach Freundlich (Abb. 1) nachgewiesen werden.

Die Abbildung 1 zeigt eine Auftragung mehrerer Messpunkte, jeder bestehend aus Adsorber-Beladekapazität auf der Y-Achse und die dabei jeweils vorliegenden Gleichgewichtskonzentrationen in der Flüssigkeitsphase außerhalb des Adsorberpartikels auf der X-Achse. Verschiedene Symbole repräsentieren verschiedene Adsorberprodukte unterschiedlicher Hersteller. Die gestrichelten Linien verbinden Punkte zu sogenannten Isothermen, die eine Vorhersage der erreichbaren Kapazität in Abhängigkeit von der Arsen-Konzentration in der Rohlösung erlaubt. Die gestrichelten Linien können nach einer Formel der grundsätzlichen Form Q = K₁ * C^{K2}, der Freundlich-Gleichung, dargestellt werden

Dies bedeutet, dass sich grundsätzlich mit steigenden Zulaufkonzentrationen eine Erhöhung der Aufnahmekapazität einstellt, d.h. es wird keine Sättigungskapazität wie nach dem Langmuir-Isothermentyp erreicht. Daraus folgt, dass bei den in typischen Anwendungen eher niedrigen Arsen-Konzentrationen nur geringe Kapazitäten auf dem Adsorbermaterial erreichbar sind. Dies ist ein wesentlicher Nachteil der gängigen Verfahren, da die Arsen-Konzentration im verbrauchten und zu deponierenden Adsorbens der wesentliche Kostenfaktor des Gesamtverfahrens darstellt.

Dieses Isothermenverhalten zeigen alle gängigen Adsorbermaterialien und auch die alternativ eingesetzte Fällung an Eisenpartikeln.

Aufgabe der vorliegenden Erfindung ist die Bereitstellung eines verbesserten Verfahrens zum Entfernen von Arsen aus wässrigen Lösungen, worin eine möglichst hohe und gleichzeitig nicht desorbierbare Arsenbeladung im zu deponierenden Rückstand verbleiben soll.

Die Aufgabe wird erfindungsgemäß gelöst durch die Bereitstellung eines Verfahrens, welches durch die folgenden Schritte gekennzeichnet ist:
a) Beladen von regenerierbarem Arsen-Adsorbermaterial mit Arsen-haltiger Lösung,
b) Regenerieren des beladenen Arsen-Adsorbermaterials mit alkalischer Lösung,
c) gegebenenfalls Waschen des regenerierten Arsen-Adsorbermaterials,
d) gegebenenfalls Wiederholen der Schritte a) bis c),
e) Neutralisieren des Regenerats mit Säure,
f) Beladen von nicht-renerierbarem Arsen-Adsorbermaterial mit dem neutralisierten Regenerat.

Dadurch, dass eine hohe und gleichzeitig nicht desorbierbare Arsen-Beladung im zu deponierenden Rückstand verbleibt, führt das erfindungsgemäße Verfahren zu einer Reduktion der Anschaffungs- und Entsorgungskosten. Durch die erfindungsgemäße Modifikation des üblichen Verfahrens zur Arsen-Entfernung aus Lösungen wird die Arsen-Konzentration auf dem Absorbens höchstmöglich gesteigert. Diese Anreicherung wird erfindungsgemäß durch Verwendung von regenerierbarem Arsen-Adsorbermaterial erzielt, dessen Regenerat dann über nicht-regenerierbares, jedoch deponiefähiges Adsorbermaterial geleitet wird.

Das mit Arsen belastete Zulaufwasser wird also in einem ersten Schritt mit regenerierbarem Adsorbermaterial in Kontakt gebracht und vorzugsweise über eine oder mehrere regenerierbare Adsorbersäulen geleitet. Im Ablauf solcher Säulen wird der geforderte Arsen-Grenzwert unterschritten und die ablaufende Lösung kann ihrer Verwendung zugeführt werden. Nach Erreichung der Beladekapazität, die dem o.g. Isothermengesetz folgend eher niedrig ist, wird das erste Adsorbermaterial dann der Regeneration zugeführt. Im Regenerat fällt das Arsen in deutlich höher konzentrierter Form an. Der Arbeitspunkt der Adsorption auf der Isotherme der Arsen-Adsorbermaterialien wird also zu höheren Konzentrationen hin verschoben. Das Regenerat mit der hohen Arsen-Konzentration wird vorzugsweise nach Einstellung des optimalen pH-Wertes in der zweiten Stufe mit einem zweiten, nicht-regenerierbaren Adsorbermaterial in Kontakt gebracht und vorzugsweise über eine oder mehrere nicht-regenerierbare Adsorbersäulen geleitet. Aufgrund der hohen Zulaufkonzentration kann das Adsorbermaterial, wie oben beschrieben, aufgrund der Isotherme nach Freundlich eine entsprechend deutlich höhere Kapazität erreichen. Überraschenderweise folgt trotz des sehr hohen Salzgehaltes im neutralisierten Regenerat die Kapazität des zweiten Adsorbermaterials immer noch gut der Freundlich-Isotherme und ist nicht geringer als vorhergesagt. Die hier vorliegenden ionischen Konkurrenten spielen also interessanterweise keine Rolle. Die erhöhte Kapazität bedeutet damit also tatsächlich einen deutlich reduzierten Mengenbedarf an frischem Adsorbermaterial und eine dementsprechende geringe Menge, welche entsorgt bzw. deponiert werden muss.

Ein wesentlicher Vorteil der vorliegenden Erfindung ist also, dass einerseits das Material der ersten Adsorptionsstufe nicht deponiert wird, sondern über lange Zeit per Regeneration wiederholt verwendet werden kann und andererseits die zweite Stufe mit einem wesentlich geringeren mittleren Flüssigkeitsstrom, jedoch deutlich erhöhter Arsen-Konzentration beaufschlagt wird, was die verbrauchten und zu deponierenden Mengen auf doppelte Weise reduziert.

Die in der zweiten Stufe zu reinigenden neutralisierten alkalischen Regenerierlösungen enthalten vorzugsweise zwischen 10 und 500 ppm Arsen, insbesondere zwischen 50 und 300 ppm Arsen.

Für das erfindungsgemäße Verfahren werden in der ersten Stufe regenerierbare Arsen-Adsorbermaterialien, wie z.B. Lewatit® FO 36, Bayoxide® E 33 oder ähnliche Typen, verwendet.

Das erfindungsgemäße Verfahren wird vorzugsweise in der ersten Stufe als Säulenverfahren durchgeführt.

Das Beladen des regenerierbaren ("ersten") Arsen-Adsorbermaterials erfolgt vorzugsweise mit einer Fließrate von 2 bis 30 Bettvolumen pro Stunde, insbesondere von 5 bis 20 Bettvolumen pro Stunde.

Für das Regenerieren des ersten Arsen-Adsorbermaterials wird erfindungsgemäß eine alkalische Lösung, vorzugsweise eine Natronlauge-Lösung, verwendet. Besonders bevorzugt enthält die Lösung zwischen 1 und 4 % NaOH pro 1.

Das Regenerieren des ersten Arsen-Adsorbermaterials erfolgt vorzugsweise mit einer Fließrate von 2 bis 10 Bettvolumen pro Stunde, insbesondere von 3 bis 5 Bettvolumen pro Stunde.

Gegebenenfalls wird das erste Arsen-Adsorbermaterial nochmals mit Wasser, insbesondere mit enthärtetem Wasser, gewaschen, und zwar vorzugsweise mit einer Fließrate von 2 bis 20 Bettvolumen pro Stunde, insbesondere von 3 bis 5 Bettvolumen pro Stunde.

Das Neutralisieren des ersten Arsen-Adsorbermaterials erfolgt vorzugsweise mit Salzsäure oder Schwefelsäure, vorzugsweise auf pH-Werte von 5 bis 7, insbesondere von 6 bis 6,5.

Als nicht-regenerierbares Adsorbermaterial in der zweiten Stufe können alle gängigen Eisenhydroxid-Adsorber verwendet werden; vorzugsweise hochkapazitive Typen wie Bayoxide® E 33 HC, E 33 P, GEH oder Ferrosorb®.

Die Entsorgung des hoch beladenen Arsen-Adsorbermaterials findet gewöhnlich in einer Deponie statt.

Vorzugsweise führt man in der zweiten Stufe ein Batch- oder ein Säulenverfahren durch, besonders bevorzugt ein Säulenverfahren im Abstrom.

Das Beladen des nicht-regenerierbaren ("zweiten") Arsen-Adsorbermaterials erfolgt vorzugsweise mit einer Fließrate von 2 bis 20 Bettvolumen pro Stunde, insbesondere von 5 bis 15 Bettvolumen pro Stunde.

Das erfindungsgemäße Verfahren kann mit jeder Art Arsen-haltiger Lösungen angewendet werden, vorzugsweise zum Reinigen Arsen-belasteter Grund- oder Brunnenwässer.

### Beispiel

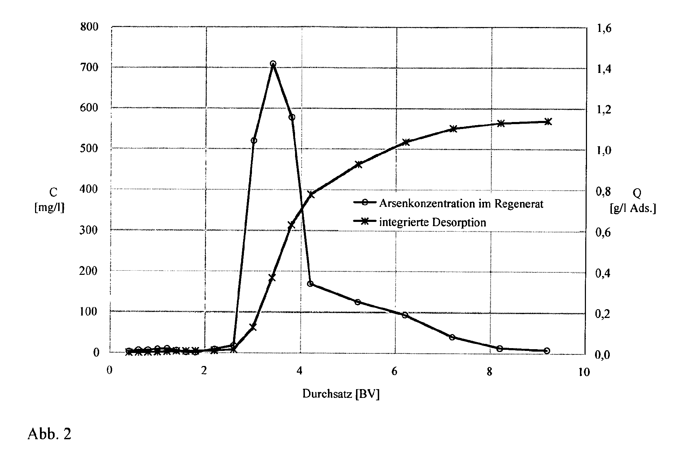

Nach Vorversuchen im Labor wurden 500 ml eines regenerierbaren Adsorbers auf eine Arsen-Beladung von 1,14 g/l Adsorber beladen. Dies entspricht einer Beladekapazität, welche sich bei typischen Arsen-Zulaufkonzentrationen (10 bis 100 ppb) im Rohwasser einstellt. Der so beladene Adsorber wurde mit alkalischer Kochsalzlösung regeneriert und das Regenerat fraktioniert aufgefangen und analysiert. Die Abbildung 2 zeigt den Konzentrationsverlauf im Regenerat und die dabei erreichte Desorption in g/l Adsorber. Die Fraktionen von 3 bis 6,2 BV wurden zur Beladung des zweiten, nicht regenerierbaren Adsorbermaterials verwendet. Die in dieser Fraktion resultierende Arsen-Konzentration betrug 190 ppm. Auf dem zweiten Adsorber konnte eine Beladekapazität von 73 g Arsen/l Harz erzielt werden.

Wenn man dagegen im Zulauf von der Konzentration von 100 ppb ausgegangen wäre und entsprechend der Isotherme eine dafür erreichbare Kapazität von 4 bis 7 g/l Adsorbermaterial abgelesen hätte (je nach verwendetem Adsorbermaterial), erreicht man durch die erfindungsgemäße vorherige Aufkonzentration durch einen regenerierbaren Adsorber eine um den Faktor 10 bis 18 höhere Beladekapazität oder andersherum eine Senkung des zu deponierenden Adsorbervolumens um diesen Faktor.

## Patentansprüche

1. Verfahren zum Entfernen von Arsen aus wässrigen Lösungen, **gekennzeichnet durch** die folgenden Schritte:
a) Beladen von regenerierbarem Arsen-Adsorbermaterial mit Arsen-haltiger Lösung,
b) Regenerieren des beladenen Arsen-Adsorbermaterials mit alkalischer Lösung,
c) gegebenenfalls Waschen des regenerierten Arsen-Adsorbermaterials,
d) gegebenenfalls Wiederholen der Schritte a) bis c),
e) Neutralisieren des Regenerats mit Säure,
f) Beladen von nicht-regenerierbarem Arsen-Adsorbermaterial mit dem neutralisierten Regenerat.

2. Verfahren gemäß Anspruch 1, **dadurch gekennzeichnet, dass** die Lösung zwischen 10 und 500 ppm Arsen, insbesondere zwischen 50 und 300 ppm Arsen enthält.

3. Verfahren gemäß Anspruch 1 oder 2, **dadurch gekennzeichnet, dass** das beladene Arsen-Adsorbermaterial mit NaOH regeneriert wird.

4. Verfahren gemäß einem der Ansprüche 1 bis 3, **dadurch gekennzeichnet, dass** das Regenerat mit Salzsäure oder Schwefelsäure neutralisiert wird.

5. Verfahren gemäß einem der Ansprüche 1 bis 4, **dadurch gekennzeichnet, dass** der pH-Wert auf 5 bis 7, insbesondere auf 6 bis 6,5 eingestellt wird.

6. Verfahren gemäß einem der Ansprüche 1 bis 5, **dadurch gekennzeichnet, dass** als nicht-regenerierbares Arsen-Adsorbermaterial Eisenhydroxid-Adsorbermaterialien verwendet werden.
